Europäisches Patentamt

European Patent Office

Office européen des brevets

(11) Publication number: **0 155 034**
**B1**

(12) **EUROPEAN PATENT SPECIFICATION**

(45) Date of publication of patent specification: **12.10.88**

(51) Int. Cl.⁴: **E 04 B 1/86,** H 04 R 1/28, F 02 C 7/045

(21) Application number: **85200228.6**

(22) Date of filing: **20.02.85**

(54) Sound attenuating structure.

(30) Priority: **29.02.84 NL 8400655**
**24.04.84 US 603500**

(43) Date of publication of application:
**18.09.85 Bulletin 85/38**

(45) Publication of the grant of the patent:
**12.10.88 Bulletin 88/41**

(84) Designated Contracting States:
**DE FR GB**

(56) References cited:
**AU-B- 483 770**
**GB-A- 530 029**
**GB-A-2 056 367**
**US-A-4 336 292**

(73) Proprietor: **Fokker Aircraft B.V.**
**Schipholdijk 231 P.O. Box 7600**
**NL-1117 ZJ Schiphol (NL)**

(72) Inventor: **Sarin, Sohan Lal**
**v.d. Berghlaan 183**
**NL-2132 AD Hoofddorp (NL)**
Inventor: **Zandbergen, Teun**
**Eemsstraat 16**
**NL-8303 LH Emmeloord (NL)**

(74) Representative: **van der Beek, George Frans**
**et al**
**Nederlandsch Octrooibureau Johan de Wittlaan**
**15 P.O. Box 29720**
**NL-2502 LS 's-Gravenhage (NL)**

Courier Press, Leamington Spa, England.

## Description

The invention relates to a sound attenuating structure including a core layer comprising honeycomb shaped cells directed perpendicular to the main surface of the structure, a closed sheet at one side of said core layer and a perforated sheet at the other side of said core layer, at which side the sound waves are impinging onto the structure.

The invention relates further to a sound attenuating structure including a combination of a number of core layers comprising cells directed perpendicular to the main surface of the structure, which core layers are mutually separated by perforated separating sheets, a closed sheet at one side of said combination and a perforated sheet at the other side of said combination at which side the sound waves are impinging onto the structure.

Sound attenuating structures of this type are for instance described in the U.S. patents 4,291,080, 3,822,762 and 4,379,191. Sound attenuating structures of this type are for instance used a great deal in the outer casings of turboject engines of modern civil aircrafts for energy absorption of air oscillations or vibrations within a relatively small frequency band. In the known structures the passages in said one sheet are embodied in the form of a regular pattern of round cylindrical openings with a diameter of 1 à 2 mm. The attenuation quality of said structure is influenced by a large number of parameters. These parameters relate to the geometry of the combination of the (preferably honeycomb shaped) cells in the core layer or layers and the perforation openings in the separating sheets and/or in said one outer sheet, and to the contents of the frequency spectrum of air oscillations or vibrations as well as the speed of the air passing along said structure. Using such a structure into the inlet/exhaust of a turboject engine a frequency range of 500—6000 Hz and sound pressures of approximately 160 dB have to be considered as well as an air speed along this structure of for instance Mach 0.15 to 0.8.

Experiments to the behaviour of sound attenuating panels, positioned within channels as for instance the inlet passage of turbojet aircraft engines have shown that the whole situation is very complex. An important parameter for the quality of a panel as noise attenuating panel is the acoustical resistance of said panel. Ideal is a constant value of said parameter within a predetermined range of sound pressures and air speeds along the panel. In known structures with openings of 1 à 2 mm the curve of the acoustical resistance is certainly not ideal. The so-called non-linearity factor NLF for said structure is approximately equal to 10. The NLF is the ratio between the acoustical resistances at 200 cm/sec and 20 cm/sec.

According to the invention an improvement in the acoustical resistance curve in relation to a structure of the above mentioned type is realised in that the passages in said outer sheet and (if present) in the separating sheets have a cross section presenting a minimum somewhere within the sheet thickness of the structure and increasing from said minimum towards both surfaces of the respective sheet. In an alternative embodiment said minimum is located within that half of the sheet thickness which is directed to the outside of the structure. Furthermore the passages are significantly smaller and the pattern of passages has a much smaller pitch between the passages. Preferably said passages have, taken in the longitudinal direction, a symmetrical or asymmetrical double conical cross section with fluently embodied transitions as well as a number of passages per $cm^2$ equal to 2000 à 3000. Such a sheet has a porosity of 1 to 15%. The NLF of a structure of this type is approximately 2. Preferably said passages have, taken in the transversal direction, a circular or approximately circular cross section.

The invention will now be explained in more detail with reference to the drawings.

Fig. 1 illustrates a partly worked open perspective view of an acoustical panel known from the state of the art.

Fig. 2 illustrates a cross section especially through the perforated sheet belonging to the panel in Fig. 1.

Fig. 3 and 4 illustrate similar views as Fig. 1 and 2, however of an embodiment of a structure according to the invention.

Fig. 5 illustrates graphically curves for the acoustical resistances of the panels of Fig. 1 and 3.

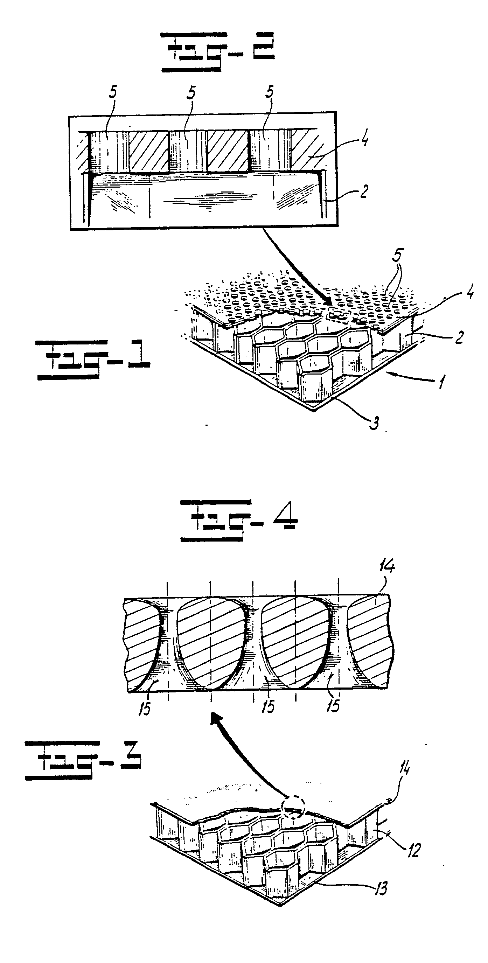

The panel 1 of Fig. 1 has a sandwich structure including a core 2 formed by a grid of honeycomb shaped cells positioned perpendicular to the surface of the structure. The wall of the cells in said honeycomb grid are closed at the under side and at the upper side by the respective sheets 3 and 4. The lower sheet 3 is a closed sheet and the upper sheet 4 has a series of passages. The thickness of the sheets 3 and 4 might be different; the necessary sheet thicknesses are strongly dependent onto the mechanical strength and stiffness requirements of the complete panel. The sheets 3 and 4 can be attached to the core 2 by means of bonding, welding or other suitable methods.

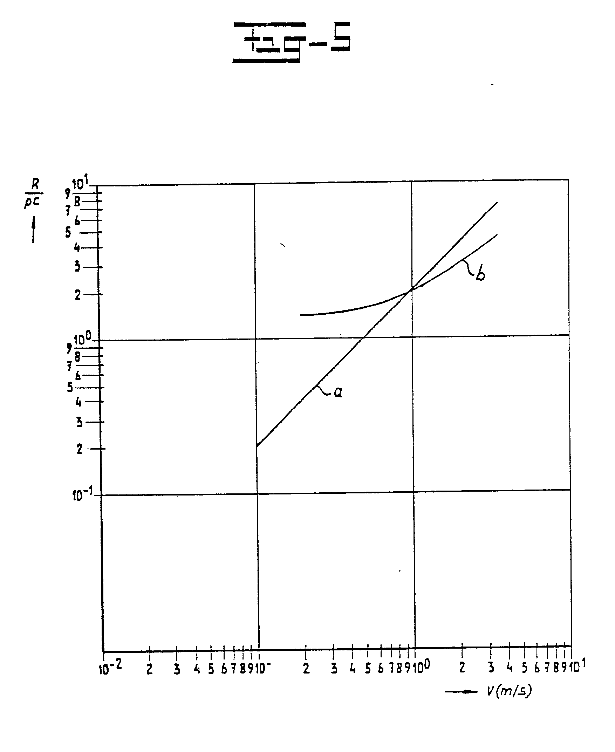

Fig. 2 illustrates a partial cross section especially through the upper sheet 4 with the therein provided passages 5 which, as appears clearly from Fig. 2, have in general a cylindrical shape.

The panel according to the invention is illustrated in Fig. 3 and including a core 12, the lower sheet 13 and the upper sheet 14. The essential difference with the structure of Fig. 1 and 2 is formed by the number of passages, the mutual distances thereof and especially the shape of the passages in the upper sheet 14, which shape is in more detail illustrated in Fig. 4. The passages 15 have a varying cross section of which the diameter is minimal somewhere within the sheet thickness, preferably in that half of the sheet thickness directed to the outside of the structure, and from this minimum diameter the diameter increases fluently towards both sheet surfaces. In Fig. 4 the passages have, viewed in longitudinal direction, an asymmetrical diabolo shape. Within the scope of the invention however also other shapes are possible for instance a double conical shape with a fluently embodied shape and round transitions. Preferably an asymmetrical shape is used whereby the smallest diameter of the passage is positioned in that half of the sheet thickness directed to the outside (the side onto which the sound waves are impinging).

Fig. 5 illustrates measurement results both for the panel of Fig. 1 as well as for the structure of Fig. 3. Along the horizontal axis the air transfer speed is plotted, that means the air speed in the direction perpendicular to the structure and measured at a relatively large distance from the structure. Along the vertical axis the factor $R/\rho C$ is plotted whereby R is the acoustical resistance, $\rho$ is the average air density and C is the average sound speed. The curve a applies to a panel which has at the side of the passing air stream respectively at the side of the sound source cylindrical round perforations as illustrated in Fig. 1. The line b applies to the embodiment according to the invention illustrated in Fig. 3. The measurements are carried out with an upper sheet having a porosity of 4%, in other words the passages measured at their minimal diameter are covering 4% of the surface area of the sheet 14, whereby the passage density was approximately 2850 per $cm^2$. In practice the ultimate shape of the passages as well as the number of passages per surface area unit may depend on the particular sound situation.

Because the thickness of the front sheet 14 is amongst others determined by the inner shape of the passages and by the number of passages per surface area unit, the thickness of the sheet can in correspondence with the attenuation requirements, be selected such small that between the core 12 and the sheet 14 a further sustaining sheet is necessary. Such a sustaining sheet has in general a relatively large porosity.

The structure according to the invention respectively the panels fabricated using such a structure or shaped products thereof are marketed by applicant under the trade name Perfolin.

**Claims**

1. Sound attenuating structure including a core layer (12) comprising honeycomb shaped cells directed perpendicular to the main surface of the structure, a closed sheet (13) at one side of said core layer and a perforated sheet (14) at the other side of said core layer, at which side the sound waves are impinging onto the structure, characterized in that the passages (15) in said last mentioned sheet (14) have a cross section presenting a minimum somewhere within the sheet thickness of the structure and increasing from this minimum towards both surfaces of said sheet.

2. Sound attenuating structure including a core layer (12) comprising honeycomb shaped cells directed perpendicular to the main surface of the structure, a closed sheet (13) at one side of said core layer and a perforated sheet (14) at the other side of said core layer, at which side the sound waves are impinging onto the structure, characterized in that the passages (15) in said last mentioned sheet (14) have a cross section presenting a minimum in that half of the sheet thickness directed to the outside of the structure and increasing from this minimum towards both surfaces of said sheet.

3. Sound attenuating structure including a combination of a number of core layers (12) comprising cells directed perpendicular to the main surface of the structure, which core layers are separated from each other by perforated separating sheets, a closed sheet (13) at one side of said combination and a perforated sheet (14) at the other side of said combination at which side the sound waves are impinging onto the structure, characterized in that the passages (15) in said last mentioned sheet (14) as well as in the separating sheets have a cross section presenting a minimum in that half of the sheet thickness directed to the outside of the structure and increasing from this minimum towards both surfaces of the respective sheet.

4. Sound attenuating structure according to claim 1, 2 or 3 characterized in that taken in the longitudinal passage direction said passages (15) have a symmetrical or asymmetrical double cross section with fluent transition.

5. Sound attenuating structure according to one of the preceding claims, characterized in that in transversal direction said passages (15) have a circular or approximately circular cross section.

**Patentansprüche**

1. Schalldämpfendes Gebilde, das eine Kernschicht (12) enthält, die wabenförmige Zellen aufweist, die senkrecht zur Hauptfläche des Gebildes weisen, das eine geschlossene Bahn (13) an einer Seite der Kernschicht und eine perforierte Bahn (14) an der anderen Seite der Kernschicht enthält, an welcher Seite die Schallwellen auf das Gebilde treffen, dadurch gekennzeichnet, daß die Durchgänge (15) in der zuletzt genannten Bahn (14) einen Querschnitt haben, der irgendwo in der Bahndicke des Gebildes ein Minimum aufweist und ausgehend von diesem Minimum in Richtung zu beiden Flächen der Bahn größer wird.

2. Schalldämpfendes Gebilde, das eine Kernschicht (12) enthält, die wabenförmige Zellen aufweist, die senkrecht zur Hauptfläche des Gebildes weisen, das eine geschlossene Bahn (13) an einer Seite der Kernschicht und eine perforierte Bahn (14) an der anderen Seite der Kernschicht enthält, an welcher Seite die Schallwellen auf das Gebilde treffen, dadurch gekennzeichnet, daß die Durchgänge (15) in wenigstens der letztgenannten Bahn (14) einen Querschnitt haben, der in jener Hälfte der Foliendicke ein Minimum aufweist, die zur Außenseite des Gebildes weist und der ausgehend von diesem Minimum in Richtung zu beiden Flächen der Bahn größer wird.

3. Schalldämpfendes Gebilde, das eine Kombination aus einer Anzahl von Kernschichten (12) enthält, die Zellen aufweisen, die senkrecht zu der Hauptfläche des Gebildes weisen, wobei die Kernschichten voneinander durch perforierte Trennbahnen getrennt sind, das eine geschlossene Bahn (13) an einer Seite der Kombination und eine perforierte Bahn (14) an der anderen Seite der Kombination enthält, an welcher Seite die Schallwellen auf das Gebilde treffen, dadurch gekennzeichnet, daß die Durchgänge (15) in der letztgenannten Bahn (14) sowie in den Trennbahnen einen Querschnitt haben, der ein Minimum in jener Hälfte der Bahndicke hat, die zur Außenseite des Gebildes weist, und der ausgehend von dem Minimum in Richtung zu beiden Flächen der entsprechenden Bahn größer wird.

4. Schalldämpfendes Gebilde nach Anspruch 1, 2 oder 3, dadurch gekennzeichnet, daß die Durchgänge (15) in Längsdurchgangsrichtung einen symmetrischen oder asymmetrischen doppelkonischen Querschnitt mit fließendem Übergang haben.

5. Schalldämpfendes Gebilde nach einem der vorangehenden Ansprüche, dadurch gekennzeichnet, daß die Durchgänge (15) in Querrichtung einen kreisförmigen oder annähernd kreisförmigen Querschnitt haben.

**Revendication**

1. Structure atténuant le son comprenant une couche centrale (12) comportant des cellules en forme de nid d'abeilles dirigées perpendiculairement à la surface principale de la structure, une feuille fermée (13) d'un côté de ladite couche centrale et une feuille perforée (14) de l'autre côté de ladite couche centrale, ce dernier côté étant celui heurté par les ondes sonores, caractérisée en ce que les passages (15) dans ladite dernière feuille (14) ont une section transversale présentant une valeur minimale quelque part dans l'épaisseur de la feuille considérée, cette valeur croissant de ladite valeur minimale vers chacune des deux surfaces de ladite feuille.

2. Structure atténuant le son comprenant une couche centrale (12) comportant des cellules en forme de nid d'abeilles dirigées perpendiculairement à la surface principale de la structure, une feuille fermée (13) d'un côté de ladite couche centrale et une feuille perforée (14) de l'autre côté de ladite couche centrale, ce dernier côté étant celui heurté par les ondes sonores, caractérisé en ce que les passages (15) dans ladite dernière feuille (14) ont une section transversale présentant une valeur minimale dans la moitié de l'épaisseur de la feuille dirigée vers l'extérieur de la structure, cette valeur croissant de ladite valeur minimale vers chacune des deux surfaces de ladite feuille.

3. Structure atténuant le son comprenant une combinaison de plusieurs couches centrales (12) comportant des cellules dirigées perpendiculairement à la surface principale de la structure, ces couches centrales étant séparées les unes des autres par des feuilles perforées de séparation, une feuille fermée (13) à l'un des côté de ladite combinaison et une feuille perforée (14) à l'autre côté de ladite combinaison, ce dernier côté étant celui heurté par les ondes sonores, caractérisée en ce que les passages (15) dans ladite dernière feuille (14), comme dans les feuilles de séparation, ont une section transversale présentant une valeur minimale dans la moitié de l'épaisseur de la feuille dirigée vers l'extérieur de la structure, cette valeur croissant de ladite valeur minimale vers chacune des deux surfaces de ladite feuille.

4. Structure atténuant le son selon l'une des revendications 1 à 3, caractérisée en ce que lesdits passages (15), considérés suivant leur direction longitudinale, ont une section biconique symétrique ou asymétrique avec une transition sans discontinuité.

5. Structure atténuant le son selon l'une des revendications précédentes, caractérisée en ce que lesdits passages (15) ont, suivant une direction transversale, une section circulaire ou approximativement circulaire.

Fig-2

Fig-1

Fig-4

Fig-3

## Fig-5